Europäisches Patentamt

European Patent Office

Office européen des brevets

(19)

(11) Publication number : **0 487 296 A2**

(12) # EUROPEAN PATENT APPLICATION

(21) Application number : **91310641.5**

(22) Date of filing : **19.11.91**

(51) Int. Cl.⁵ : **G11B 21/00, G11B 20/10**

(30) Priority : **20.11.90 JP 317215/90**

(43) Date of publication of application :
**27.05.92 Bulletin 92/22**

(84) Designated Contracting States :
**DE FR GB NL**

(71) Applicant : **MATSUSHITA ELECTRIC
INDUSTRIAL CO., LTD.
1006, Kadoma
Kadoma-shi, Osaka-fu 571 (JP)**

(72) Inventor : **Honjo, Masahiro
1-791-613, Mukougaoka-cho, Uenoshiba
Sakai-shi, Osaka-fu 593 (JP)**
Inventor : **Takemura, Yoshinari
2-chome, 8-11, Befu
Settsu-shi, Osaka-fu, 566 (JP)**

(74) Representative : **Crawford, Andrew Birkby et al
A.A. THORNTON & CO. Northumberland
House 303-306 High Holborn
London WC1V 7LE (GB)**

(54) **High density disk apparatus.**

(57)    A rotating disk-shape recording medium has, on each of its opposite sides, a recording area which is divided in a radial direction into n recording zones (n ≥ 2). A disk apparatus for reproducing information from and/or reproducing information from the recording medium has a first group of n heads disposed to respectively oppose to the n recording zones on one side of the recording medium, and a second group of n heads disposed to respectively oppose to the n recording zones on the other side of the recording medium, each head being movable to scan its corresponding recording zone. A head drive unit causes each of the first group of n heads to move within its corresponding recording zone in a direction from an outer circumference to an inner circumference of the zone and each of the first group of n heads to move within its corresponding recording zone in a direction from an inner circumference to an outer circumference of the zone so that a sum of linear velocities of the first and second groups of n heads is substantially constant. Further, the first group of n heads and the second group of n heads respectively constitute n pairs of heads each being consituted by an i-th head from an outermost head of the first group and an i-th head from an innermost head of the second group (i = 1 through n) such that a sum of linear velocities of each pair of heads is substantially constant and equal to a sum of linear velocities of another pair of heads.

Fig. 1

EP 0 487 296 A2

The present invention relates to a disk apparatus using an optical or magnetic disk of high recording density for reproducing information recorded on the disk or both recording information on and reproducing information from the disk at a high transfer rate.

As an optical disk apparatus of the constant angular velocity (CAV) type capable of recording information at a high density equivalent to that of the constant linear velocity (CLV) system, a modified constant angular velocity (MCAV) system is known. An improved version of the MCAV system is disclosed in Japanese Laid-Open Patent Application No.63-161532. In this system, using both sides of a disk, an optical head disposed to oppose the upper side of the disk moves in the direction from the inner circumference to the outer circumference of the disk, while another optical head disposed to oppose the lower side of the disk moves in the direction from the outer circumference to the inner circumference of the disk so that the total amount of information recorded by the two optical heads is kept constant.

Another improved version of the MCAV system is disclosed in Japanese Laid-Open Patent Application No.63-161533. In this system, two heads are disposed to oppose one side of an optical disk, and the direction of the spiral track is reversed between the outer area from the center of the whole recording area of the side and the inner area from the center.

Recently, on the other hand, there is increasing demend for a system which records and reproduces video signals in a digital signal form. This digital system is required to have an extremely high transfer rate (120 Mbps for NTSC signals and 1.2 Gbps for high-definition television signals) in addition to the easy accessibility and special reproduction functions. In view of theses requirements, it would be almost impossible to realize such digital signal recording and reproducing system by the conventional CAV or CLV systems, and even by the above-described MCAV systems. In case the importance of the access performances is regarded large, the CAV system is desirable, but the problem of the CAV system is how to increase the transfer rate.

Further, it is not easy to manufacture a master disk on which the directions of the spiral tracks formed on opposite sides thereof are opposite to each other. Moreover, it is unrealistic to change the spiral direction on the same side of the disk.

Accordingly, it is aprimary object of the present invention to provide a constant angular velocity type disk apparatus which has a high recording density equivalent to that of the CLV system and an extremely high transfer rate.

To achieve this object, according to the present invention, a disk-shape recording medium has, on each of its opposite sides, a recording area which is divided at constant intervals in a radial direction into n recording zones, where n is an integer larger than one. A disk apparatus for reproducing information from the recording medium or both recording information on and reproducing information from the recording medium comprises: a rotating means for rotating the disk-shape recording medium; a first group of n heads which are disposed to respectively oppose to the n recording zones on one side of the recording medium for transferring information to or from the recording medium, each of the first group of n heads being movable to scan a corresponding one of the n recording zones on one side of the recording medium; a second group of n heads which are disposed to respectively oppose to the n recording zones on the other side of the recording medium for transferring information to or from the recording medium, each of the second group of n heads being movable to scan a corresponding one of the n recording zones on the other side of the recording medium; a data separating and combining means for separating a recording data and feeding the separated recording data to the first and second groups of n heads in a recording mode, and for combining reproduced data from the first and second groups of n heads in a reproducing mode; and head driving means for causing each of the first group of n heads to move within its corresponding recording zone in a direction from an outer circumference to an inner circumference of the corresponding recording zone and each of the first group of n heads to move within its corresponding recording zone in a direction from an inner circumference to an outer circumference of the corresponding recording zone so that a sum of linear velocities of the first and second groups of n heads relative to the recording medium is substantially constant.

Further, suppose that the first group of n heads are numbered from the outermost head, which opposes the outermost recording zone on one side of the recording medium, as first through n-th heads and the second group of n heads are numbered from the innermost head, which opposes the innermost recording zone on the other side of the recording medium, as first through n-th heads. The first head of the first group of n heads and the first head of the second group of n heads constitute a pair of heads such that the sum of the linear velocities of the pair of heads relative to the recording medium becomes substantially constant. The second head of the first group of n heads and the second head of the second group of n heads constitute a pair of heads such that the sum of the linear velocities of the pair of heads relative to the recording medium becomes substantially constant and substantially the same as that of the pair of the first heads. Similarly, all of the first group of n heads and the second group of n heads respectively constitute n pairs of heads each being consituted by an i-th head of the first group of n heads and an i-th head of the second group of n heads, where i is 1 through n, such that a sum of linear velocities of each pair of heads relative to the recording medium is substantially constant and substantially equal to a sum of linear velocities of another pair of heads relative to the recording medium.

With the above-described configuration according to the present invention, it is possible to realize a high recording density equivalent to that of the CLV systems and an extremely high transfer rate. Also, since it is not necessary to change the spiral direction of the recording medium within each side or between opposite sides, a master disk can be manufactured easily.

As a modification, additional third group of n heads and fourth group of n heads may be provided. The third group of n heads are disposed at symmetrical positions with positions of the first group of n heads with respect to the center of the disk-shape recording medium, and the fourth group of n heads are disposed at symmetrical positions with positions of the second group of n heads with respect to the center of the recording medium. The third group of n heads are disposed to respectively oppose to the n recording zones on one side of the recording medium for reproducing information from the recording medium. Each of the third group of n heads is movable to scan a corresponding one of the n recording zones on one side of the recording medium. The fourth group of n heads are disposed to respectively oppose to the n recording zones on the other side of the recording medium for reproduing information from the recording medium. Each of the fourth group of n heads is movable to scan a corresponding one of the n recording zones on the other side of the recording medium. The third and fourth groups of n heads can reprocuce infromation from the recording medium when the first and second group of n heads are recording information to or reproducing information from the recording medium.

With this modified configuration, it is possible to realize a function of recording and reproduction at the same time, a function of reproduction from different tracks at the same, and a function of special reproduction including editing reproduction at a high transfer rate. In the editing reproduction, a head is waiting on an arbitrary track and performs search of a beginning of a recorded program instantaneously.

Fig.1 is a schematic block diagram showing an optical disk apparatus as a first embodiment of the present invention;

Fig.2 is a schematic diagram showing recording zones and arrangement and movemnet of heads in the first embodiment;

Fig.3 is a schematic diagram showing recording zones and arrangement and movemnet of heads in a second embodiment of the present invention;

Fig.4 is a schematic diagram showing arrangement of addional heads in a third embodiment of the present invention.

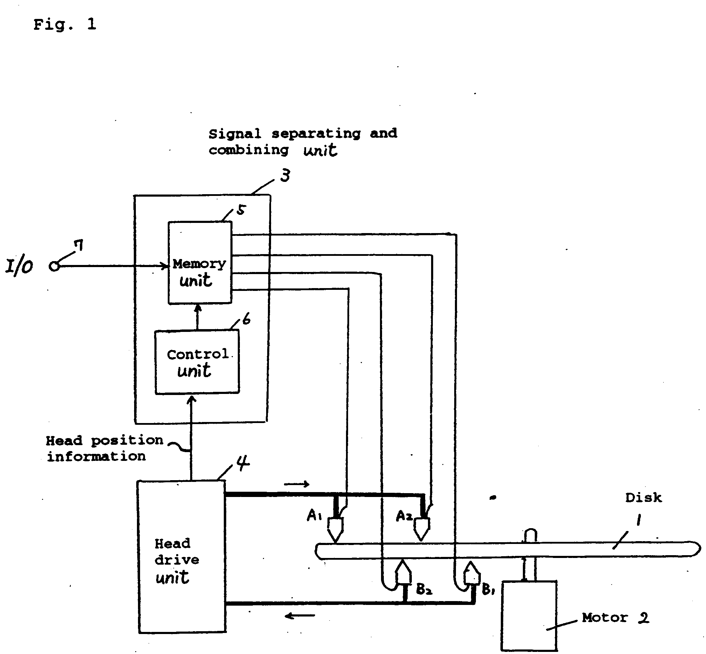

Fig.1 is a schematic block diagram showing an optical disk apparatus as a first embodiment of the present invention. An optical disc 1 is mounted on a shaft of a motor 2. The motor 2 rotates at substantially a constant rotation speed so as to cause the optical disk 1 to rotate at substantially a constant rotation speed. A group of heads A1 and A2 are disposed to oppose to the upper side of the optical disk 1, and another group of heads B1 and B2 are disposed to oppose to the lower side of the optical disk 1.

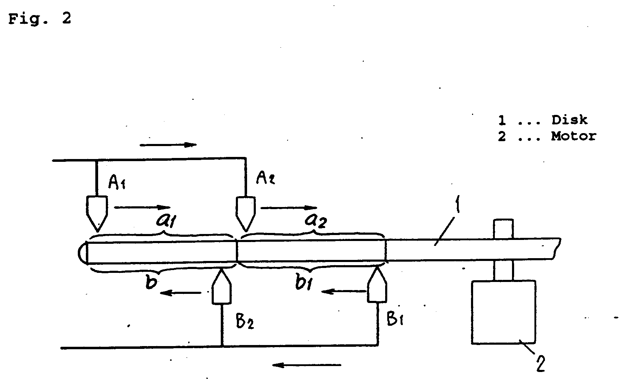

The relation of the heads to the optical disk is shown in more detail in Fig.2. Referring to Fig.2, the optical disk 1 has on its upper side a recording area which is divided at constant intervals in the radial direction from the outer peripery to the center of the disk into recording zones a1 and a2, and has on its lower side a recording area which is divided at constant intervals in the radial direction from the center to the outer peripery of the disk into recording zones b1 and b2. The head A1 is disposed to oppose to the recording zone a1 and is movable in the radial direction from the outermost circumference to the innermost circumference of the recording zone a1 for recording information onto or reproducing information from the recording zone a1. The head A2 is disposed to oppose to the recording zone a2 and is movable in the radial direction from the outermost circumference to the innermost circumference of the recording zone a2 for recording information onto or reproducing information from the recording zone a2. The head B1 is disposed to oppose to the recording zone b1 and is movable in the radial direction from the innermost circumference to the outermost circumference of the recording zone b1 for recording information onto or reproducing information from the recording zone b1. The head B2 is disposed to oppose to the recording zone b2 and is movable in the radial direction from the innermost circumference to the outermost circumference of the recording zone b2 for recording information onto or reproducing information from the recording zone b2.

Referring back to Fig. 1, during recording or reproduction of information, a head drive unit 4 drives the heads A1, A2, B1 and B2 to move at substantially a same moving speed in the respective radial directions such that each of the heads A1 and A2 moves in a corresponding recording zone (a1 or a2) from the outer circumference to the inner circumference thereof and each of the heads B1 and B2 moves in a corresponding recording zone (b1 or b2) from the inner circumference to the outer circumference thereof. Since the moving speeds of the heads in the radial direction are substantially the same and the rotation speed of the optical disk is substantially constant, a sum of linear velocities of the heads A1 and B1 relative to the disk becomes substantially constant and a sum of linear velocities of the heads A2 and B2 relative to the disk becomes substantially constant.

Also, the sum of the linear velocities of the heads A1 and B1 and the sum of the linear velocities of the heads A2 and B2 are substantially the same. Accordingly, a sum of linear velocities of the four heads A1, A2, B1 and B2 relative to the optical disk is substantially constant.

An input/output lines of each of the four heads A1, A2, B1 and B2 is connected to a signal separating and combining unit 3 which is coneted also to an input/output terminal 7. The signal separating and combining unit comprises a memory unit 5 for storing therein recording signal and reproduced signal, and a control unit 6 for controlling the memory unit 5 according to head position information supplied from the head drive unit 4. The head position information indicates current recording or reproducing positions of the four heads.

In a recording mode, under control by the control unit 6, an input signal inputted through the input/output terminal 7 is once stored in the memory unit 5, and separated in the memory unit 5 into four recording signals. The four recording signals are respectively fed to the four heads A1, A2, B1 and B2 so as to be recorded on the respective recording zones a1, a2, b1 and b2 on both sides of the optical disk 1.

In a reproduction mode, under control by the control unit 6, reproduced signals from the respective four heads A1, A2, B1 and B2 are fed to the memory unit 5, and combined in the memory unit 5 to a reproduced signal, which is outputted through the input/output terminal 7.

The linear velocity of each head varies with the movement, or the positional change, of the head. But, as described before, the sum of the linear velocities of the pair of heads A1 and B1 is substantially constant and equal to the sum of the linear velocities of the pair of heads A2 and B2. It may be thought that the amount of information recordable or reproduceable by each head is substantially proportional to the linear velocity of the head. Accordingly, it is possible to record or reproduce constant amount of information by each pair of heads (the pair of A1 and B1 or the pair of heads A2 and B2). Also, the total amount of information recorded or reproduced by the four heads A1, A2, B1 and B2 is constant irrespective of the positions of the four heads. Accordingly, the optical disk apparatus of this embodiment can perform ideal operation as a high recording density, high transfer rate optical disk apparatus.

The signal separating and combining unit 3 distributes, in the recording mode, the total amount of information of the input signal to the four heads so that the amount of information fed to each head is substantially proportional to the linear velocity of the head. In the reproduction mode, the amount of information read from each head is proportional to the linear velocity of the head. For example, when recording or reproducting information at a transfer rate of 120 Mbps, each pair of heads A1 and B1 or A2 and B2 transfer the information at a constant transfer rate of 60 Mbps although a transfer rate by each head of a pair of heads varies and different from that of the other head of the pair (for example, head A1 transfers information at 40 Mbps while head B1 transfers information at 20 Mbps at an instant, and head A1 transfers information at 45 Mbps while head B1 transfers information at 15 Mbps at another instant).

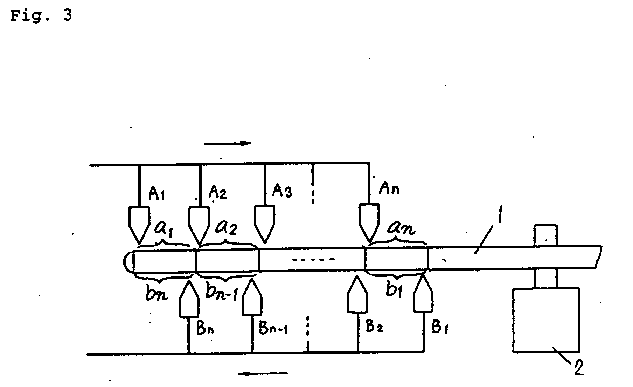

Fig.3 is a schematic diagram showing recording zones and arrangement and movemnet of heads in a second embodiment of the present invention. In this embodiment, a first group of heads A1 through An (n is an integer larger than 2) are disposed to oppose to the upper side of the optical disk 1, and a second group of heads B1 through Bn are disposed to oppose to the lower side of the optical disk 1. The optical disk 1 has on its upper side a recording area which is divided at constant intervals in the radial direction from the outer peripery to the center of the disk into recording zones a1 through an, and has on its lower side a recording area which is divided at constant intervals in the radial direction from the center to the outer peripery of the disk into recording zones b1 through bn. An i-th head Ai (i = 1, 2, ---, n) of the first group is disposed to oppose to an i-th recording zone ai and is movable in the radial direction from the outermost circumference to the innermost circumference of the recording zone ai for recording information onto or reproducing information from the recording zone ai. An i-th head Bi of the second group is disposed to oppose to an i-th recording zone bi and is movable in the radial direction from the innermost circumference to the outermost circumference of the recording zone bi for recording information onto or reproducing information from the recording zone bi. In the second embodiment, the signal separating and combining unit 3 constituted by the memory unit 5 and control unit 6, and the head drive unit 4 are arranged in the similar manner as shown in Fig.1.

During recording or reproduction of information, the head drive unit 4 drives the first and second groups of n heads to move at substantially a same moving speed in the respective radial directions such that each (Ai) of the first group of heads A1 through An moves in a corresponding recording zone (ai) from the outer circumference to the inner circumference thereof and each (Bi) of the second group of heads B1 through Bn moves in a corresponding recording zone (bi) from the inner circumference to the outer circumference thereof. Since the moving speeds of the heads in the radial direction are substantially the same and the rotation speed of the optical disk is substantially constant, a sum of a linear velocity of an i-th head Ai of the first group of n heads relative to the disk and a linear velocity of an i-th head Bi of the second group of n heads relative to the disk becomes substantially constant. In other words, the heads Ai and Bi constitute a pair so that the sum of the linear velocities of the pair of heads is substantially constant and equal to the sum of linear velocities of another pair of heads Ar and Br (r = 1, 2, ---, n, and not equal to i). Accordingly, a total sum of linear velocities of the first and second groups of heads A1 through An and B1 through Bn relative to the optical disk is substantially constant.

Other operations of the second embodiment are the same as those of the first embodiment.

In the second embodiment, if the transfer rate by each pair of heads is R Mbps, the total transfer rate of the optical disk apparatus becomes n x R Mbps. That is, if the number (n) of heads in each group of heads is increased, the transfer rate can be increased to an extremely high transfer rate.

To manufacture an optical disk, two disks may be cut on respecitve front surfaces in a same spiral direction, and adhered to each other on respective back surfaces. With this optical disk, it is easy to move the first group of heads in a reverse direction to the moving direction of the second group of heads as described above.

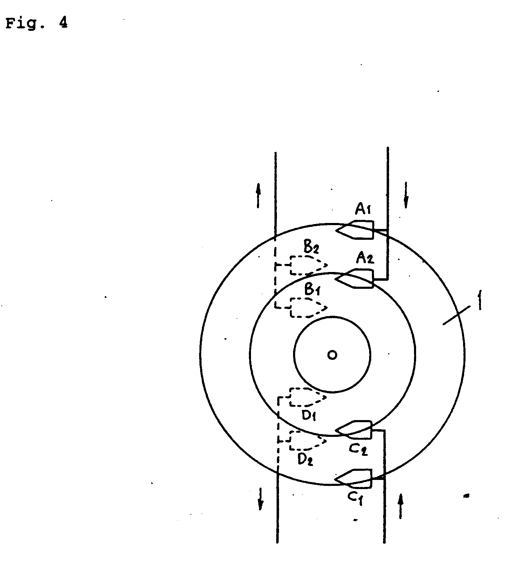

Fig.4 is a schematic diagram showing head arrangement in a third embodiment of the present invention. This embodiment has the basic configuration shown in Fig.1, and additionally provided with a third group of heads C1 and C2 and a fourth group of heads D1 and D2 for reproducing information from the optical disk. Positions of the third group of heads C1 and C2 are symmetrical with the positions of the first group of heads A1 and A2 with respect to the center of the optical disk 1, and positions of the fourth group of heads D1 and D2 are symmetrical with the positions of the second group of heads B1 and B2 with respect to the center of the optical disk 1. The relations between the third and fourth groups of heads to each other and to the optical disk in arrangement and movement are the same as those between the first and second groups of heads.

The additional third and fourth groups of heads can reproduce recorded information from the optical disk while the first and second groups of heads are performing recording information onto or reproducing information from the same optical disk. Accordingly, it is possible to realize a function of recording and reproduction at the same time, a function of reproduction from different tracks at the same, and a function of special reproduction including editing reproduction at a high transfer rate.

It is needless to mention that the concept of the third embodiment is applicable to the second embodiment. That is, when the number of heads in each of the first and second groups of heads is n, the number of heads in each of the additional third and fourth groups of heads may be made to be the same number n.

The optical disk apparatuses are described in the foregoing description, but the present invention can be applied to any other disk-shape recording medium including a magnetic disk.

## Claims

1. A disk apparatus for recording information on and/or reproducing information from a disl-shape recording medium which has on each of its opposite sides a recording area which is divided at constant intervals in a radial direction into n recording zones, where n is an integer larger than one, said apparatus comprising:

a rotating means for rotating the recording medium at substantially a constant rotating speed;

a first group of n heads which are disposed to respectively oppose to the n recording zones on one side of the recording medium for transferring information to or from the recording medium, each of the first group of n heads being movable to scan a corresponding one of the n recording zones on one side of the recording medium;

a second group of n heads which are disposed to respectively oppose to the n recording zones on the other side of the recording medium for transferring information to or from the recording medium, each of the second group of n heads being movable to scan a corresponding one of the n recording zones on the other side of the recording medium;

data separating and combining means for separating a recording data and feeding the separated recording data to the first and second groups of n heads in a recording mode, and for combining reproduced data from the first and second groups of n heads in a reproducing mode; and

head driving means for causing each of the first group of n heads to move within its corresponding recording zone in a direction from an outer circumference to an inner circumference of the corresponding recording zone and each of the first group of n heads to move within its corresponding recording zone in a direction from an inner circumference to an outer circumference of the corresponding recording zone so that a sum of linear velocities of the first and second groups of n heads relative to the recording medium is substantially constant.

2. An apparatus according to claim 1, wherein, all of the first group of n heads and the second group of n heads respectively constitute n pairs of heads each being consituted by an i-th head of the first group of n heads counted from an outermost head of the first group of n heads and an i-th head of the second group of n heads counted from an innermost head of the second group of n heads, where i is 1 through n, such that a sum of linear velocities of each pair of heads relative to the recording medium is substantially constant and substantially equal to a sum of linear velocities of another pair of heads relative to the recording medium.

With the above-described configuration according to the present invention, it is possible to realize a high recording density equivalent to that of the CLV systems and an extremely high transfer rate. Also, since it is not necessary to change the spiral direction of the recording medium within each side or between opposite sides, a master disk can be manufactured easily.

3. An apparatus according to claim 1, further comprising:

a third group of n heads which are disposed at symmetrical positions with positions of the first group of n heads with respect to a center of the recording medium, and respectively oppose to the n recording zones on one side of the recording medium for reproducing information from the recording medium, each of the third group of n heads being movable to scan a corresponding one of the n recording zones on one side of the recording medium; and

a fourth group of n heads which are disposed at symmetrical positions with positions of the second group of n heads with respect to the center of the recording medium, and respectively oppose to the n recording zones on the other side of the recording medium for reproducing information from the recording medium, each of the fourth group of n heads being movable to scan a corresponding one of the n recording zones on the other side of the recording medium.

4. An apparatus according to claim 1, wherein an amount of information recorded on or reproduced from the recording medium with each head of the first and second groups of n heads is substantially proportional to a linear velocity of said head erlative to the recording medium.

5. An apparatus according to claim 1, wherein n = 2.

Fig. 1

Signal separating and
combining unit

Fig. 2

1 ... Disk
2 ... Motor

Fig. 3

Fig. 4